# FASCICULE DE BREVET EUROPEEN

(11) **EP 3 356 699 B1**
(45) Date de publication et mention de la délivrance du brevet: **27.05.2020**
(21) Numéro de dépôt: 16779160.7
(22) Date de dépôt: 20.09.2016
(51) Int. Cl.: F16H 1/22, F01D 25/16, F16H 57/021

(54) **REPARTITION DE CHARGES DANS UN REDUCTEUR DE VITESSE A DEUX LIGNES INTERMEDIAIRES DE TRANSMISSION**
LASTVERTEILUNG IN EINEM UNTERSETZUNGSGETRIEBE MIT ZWEI ZWISCHENÜBERTRAGUNGSLEITUNGEN
LOAD DISTRIBUTION IN A SPEED REDUCER WITH TWO INTERMEDIATE TRANSMISSION LINES

(30) Priorité: 30.09.2015 FR 1559295
(43) Date de publication de la demande: 08.08.2018
(73) Titulaire: Safran Transmission Systems, 92700 Colombes (FR)
(72) Inventeur: MATHIEU, Antoine, 77550 Moissy Cramayel (FR); FERAUD, Benjamin, 77550 Moissy Cramayel (FR); MORELLI, Boris, 77550 Moissy Cramayel (FR); AMIET, Maxime, 77550 Moissy Cramayel (FR)
(74) Mandataire: Gevers & Orès
(86) Numéro de dépôt international: PCT/FR2016/052380
(87) Numéro de publication internationale: WO 2017/055707

(56) Documents cités:
- EP-A1- 0 636 813
- WO-A1-2013/150229
- FR-A5- 2 221 981
- GB-A- 633 971
- US-A- 3 772 934

## Description

### DOMAINE TECHNIQUE

La présente invention concerne un réducteur de vitesse à deux lignes intermédiaires de transmission, en particulier pour une turbomachine.

### ETAT DE L'ART

L'état de l'art comprend notamment les documents US-A-3,772,934, EP-A1-0 636 813 et WO-A1-2013/150229.

Une turbomachine peut comprendre un ou plusieurs réducteurs mécaniques de vitesse. C'est notamment le cas d'un turbopropulseur dont l'hélice est entraînée en rotation par un arbre de turbine par l'intermédiaire d'un réducteur de vitesse.

Il existe plusieurs types de réducteur de vitesse tels que les réducteurs à trains épicycloïdaux, à chaînes, à vis sans fin, à lignes intermédiaires de transmission, etc. La présente invention concerne essentiellement un réducteur à lignes intermédiaires de transmission (aussi appelé réducteur composé ou « compound »).

Dans la technique actuelle, un réducteur de vitesse de ce type comprend une ligne d'entrée et une ligne de sortie entraînée par la ligne d'entrée par l'intermédiaire de deux lignes intermédiaires de transmission. La puissance transmise par la ligne d'entrée est séparée entre les lignes intermédiaires avant d'être transférée à la ligne de sortie. Les lignes intermédiaires de transmission sont parallèles et comportent en général chacune un arbre portant un pignon d'entrée engrainé avec la ligne d'entrée et un pignon de sortie engrainé avec la ligne de sortie. En jouant sur le nombre de dents des différents pignons, il est possible d'obtenir un rapport de réduction entre la ligne d'entrée et la ligne de sortie. Cette architecture permet une réduction de vitesse importante dans un espace confiné et avec une masse maîtrisée.

Par définition, un réducteur de ce type est un système hyperstatique. Sans aménagement particulier, il est possible qu'une ligne intermédiaire passe la majorité de la puissance moteur, tandis que l'autre ligne intermédiaire ne passe pratiquement pas de puissance.

Il existe donc un besoin de répartir les charges entre les lignes intermédiaires dans un réducteur du type précité pour s'assurer que la moitié de la puissance transite par chacune des lignes intermédiaires du réducteur.

Une solution consiste à prévoir des moyens rotulants d'accouplement en rotation d'une extrémité de la ligne d'entrée, et des moyens d'amortissement des déplacements radiaux d'une extrémité opposée de la ligne d'entrée.

La ligne d'entrée est susceptible de se déplacer radialement (vis-à-vis de son axe longitudinal). Ceci est rendu possible par le fait qu'une des extrémités de la ligne d'entrée est montée rotulante, par rapport par exemple à un arbre moteur. L'extrémité opposée de la ligne d'entrée peut alors se déplacer en direction radiale, ces déplacements étant amortis. Ces moyens rotulants et d'amortissement forment des moyens de répartition de charges, qui fonctionnent de la façon suivante. Si une des lignes intermédiaires est plus chargée, cela veut dire que le couple transitant par cette ligne est plus important que sur l'autre ligne, donc l'effort engendré par ce couple sur le pignon de la ligne d'entrée est plus important d'un côté que de l'autre. Une force sera donc appliquée sur le pignon d'entrée, ce qui provoquera le déplacement radial de la ligne d'entrée. Ce déplacement permet de rééquilibrer les jeux au niveau de la ligne d'entrée. A l'équilibre, les efforts sur le pignon dus aux couples sur les lignes intermédiaires s'annulent, ce qui veut dire que les couples sur les lignes intermédiaires sont égaux.

Cependant, cette solution peut entraîner un désalignement du pignon. Ce fonctionnement désaligné oblige à appliquer une correction longitudinale de type « bombé » sur les dents du pignon. Cette correction induit une augmentation de la pression superficielle sur les dents. De plus, si le désalignement est important, il n'est pas forcément possible d'assurer un fonctionnement acceptable du réducteur, même avec application d'un bombé.

### EXPOSE DE L'INVENTION

La présente invention propose une solution simple, efficace et économique au problème décrit ci-dessus.

L'invention propose un réducteur de vitesse à deux lignes intermédiaires de transmission, en particulier pour une turbomachine, comprenant une ligne d'entrée et une ligne de sortie entraînée par la ligne d'entrée par l'intermédiaire desdites lignes intermédiaires, ces lignes intermédiaires étant sensiblement parallèles, caractérisé en ce qu'il comprend des moyens de répartition de charges entre lesdites lignes intermédiaires, ces moyens de répartition de charges comportant des moyens rotulants d'accouplement en rotation d'une première extrémité de la ligne d'entrée, des premiers moyens d'amortissement des déplacements radiaux de ladite première extrémité de la ligne d'entrée, et des seconds moyens d'amortissement des déplacements radiaux d'une seconde extrémité opposée de la ligne d'entrée.

Le principe de l'invention est de monter la ligne d'entrée sur deux moyens d'amortissement distants. L'invention permet à la ligne d'entrée de se déplacer verticalement sans désalignement.

Le réducteur selon l'invention peut comprendre une ou plusieurs des caractéristiques suivantes, prises isolément ou en combinaison les unes avec les autres :
- lesdits premiers et seconds moyens d'amortissement sont configurés pour autoriser des déplacements de la ligne d'entrée dans une direction sensiblement perpendiculaire à un plan passant sensiblement par des axes des lignes intermédiaires,
- lesdits premiers et seconds moyens d'amortissement comprennent des ressorts, de préférence de rappel,
- lesdits ressorts sont identiques,
- lesdits premiers et seconds moyens d'amortissement comprennent des paliers à roulement,
- chacun desdits premiers et seconds moyens d'amortissement comprend un palier à roulement qui est monté sur ladite première ou seconde extrémité de la ligne d'entrée, et qui est supporté par un ressort,
- lesdits premiers et seconds moyens d'amortissement sont identiques,
- lesdits premiers et seconds moyens d'amortissement sont montés de part et d'autre d'un pignon de la ligne d'entrée, et
- lesdits premiers et seconds moyens d'amortissement () sont situés à équidistance dudit pignon ; on peut placer les roulements à équidistance de la denture du pignon pour avoir le même déplacement sur chaque roulement et éviter ainsi un désalignement de la denture.

La présente invention concerne également une turbomachine, caractérisée en ce qu'elle comporte au moins un réducteur tel que décrit ci-dessus. Le réducteur peut comprendre une ligne de sortie configurée pour entraîner une hélice non carénée de la turbomachine.

La turbomachine est de préférence un turbopropulseur d'aéronef.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique d'un réducteur de vitesse à deux lignes intermédiaires de transmission, vu de côté,
- la figure 2 est une vue très schématique d'un réducteur de vitesse à deux lignes intermédiaires de transmission, vu de face,
- les figures 3 et 4 sont des vues schématiques partielles et de face d'un réducteur du type précité, la figure 3 représentant une répartition non homogène des charges entre les lignes intermédiaires et la figure 4 représentant une répartition homogène des charges entre les lignes intermédiaires,
- la figure 5 est une vue très schématique d'une ligne d'entrée équipée de moyens de répartition de charges, et
- la figure 6 est une vue très schématique d'une ligne d'entrée équipée de moyens de répartition de charges selon l'invention.

### DESCRIPTION DETAILLEE

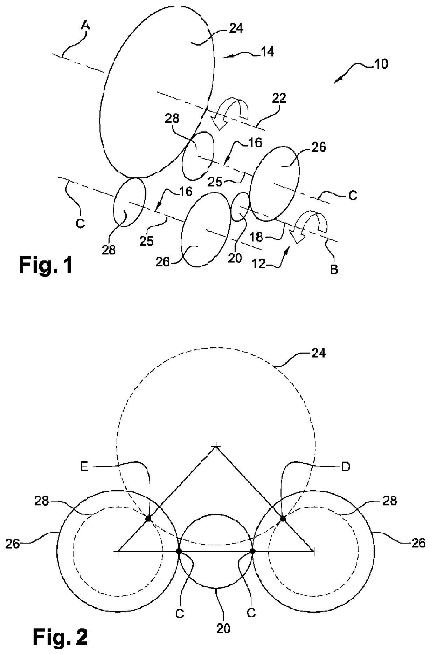

La figure 1 représente de manière très schématique un réducteur 10 de vitesse à deux lignes intermédiaires de transmission, ce réducteur 10 comportant pour l'essentiel quatre parties : une ligne d'entrée 12, une ligne de sortie 14 et deux lignes intermédiaires de transmission 16 qui sont entrainées par la ligne d'entrée 12 et entraînent à leur tour la ligne de sortie 14.

Les différentes parties 12, 14, 16 du réducteur sont en général montées dans un carter du réducteur qui n'est pas représenté ici, ce carter comportant un premier orifice pour le passage de la ligne d'entrée et son raccordement à un premier élément d'une turbomachine par exemple, et un second orifice pour le passage de la ligne de sortie et son raccordement à un second élément de la turbomachine. Le premier élément est par exemple un arbre de turbine de la turbomachine et le second élément est un arbre d'entraînement d'une hélice de cette turbomachine dans le cas où cette dernière est un turbopropulseur.

La ligne d'entrée 12 comprend un arbre 18 portant un pignon 20 à denture externe. Le pignon 20 et l'arbre 18 sont coaxiaux et tournent autour d'un même axe noté B.

La ligne de sortie 14 comprend un arbre 22 portant un pignon 24 à denture externe. Le pignon 24 et l'arbre 22 sont coaxiaux et tournent autour d'un même axe noté A. Ils tournent ici dans le même sens de rotation que le pignon 20 et l'arbre 18 de la ligne d'entrée.

Les lignes d'entrée et de sortie 12, 14 sont parallèles. Leurs axes de rotation A, B sont donc parallèles.

Les lignes intermédiaires de transmission 16 sont sensiblement parallèles et identiques. Chaque ligne 16 comporte un arbre 25 qui porte un pignon d'entrée 26 à une première extrémité et un pignon de sortie 28 à une seconde extrémité. Les pignons de sortie 28 sont engrenés avec le pignon 24 de la ligne de sortie 14. Les pignons d'entrée 26 sont engrenés avec le pignon 20 de la ligne d'entrée 12. Les pignons 26, 28 sont à dentures externes. Chaque arbre 25 et ses pignons 26, 28 sont coaxiaux et tournent autour d'un même axe noté C, parallèle aux axes A et B.

Comme expliqué dans ce qui précède, ce type de réducteur 10 est un système hyperstatique et il est possible qu'une ligne intermédiaire 16 passe la majorité de la puissance moteur, tandis que l'autre ligne intermédiaire ne passe pratiquement pas de puissance. Comme on le voit en figure 2, cette mauvaise répartition de puissance ou de charges est notamment due au fait que, bien que les pignons 26 soient en contact aux points C avec le pignon 20, et que le pignon 28 de l'une des lignes intermédiaires soit en contact au point D avec le pignon 24, il est difficile de s'assurer de l'absence de jeu en E, entre le pignon 24 et le pignon 28 de l'autre ligne intermédiaire.

L'invention propose une solution à ce problème en équipant le réducteur 10 de moyens de répartition des charges entre les lignes intermédiaires 16.

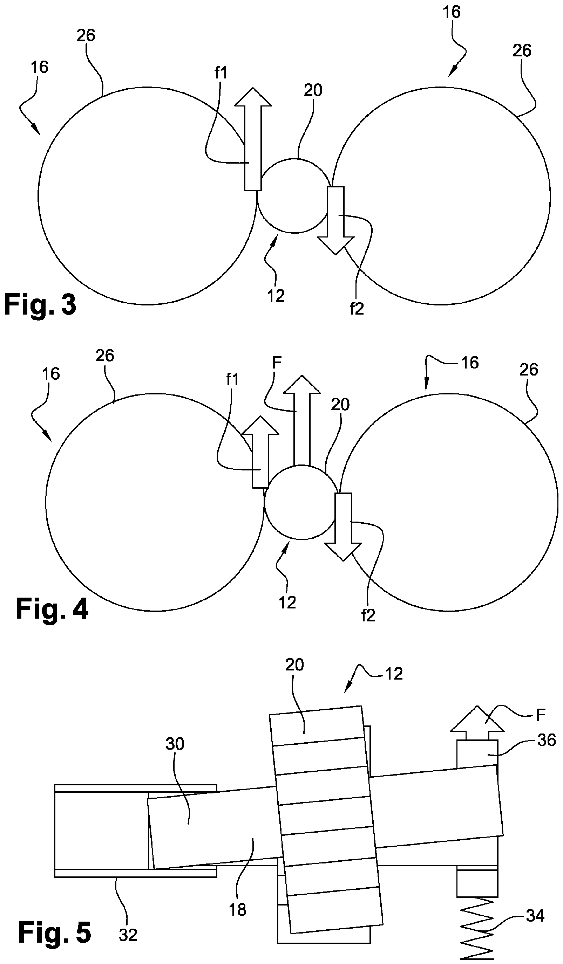

Le principe général de la répartition de charges est représenté aux figures 3 à 5 et la figure 6 représente un mode de réalisation de l'invention.

L'arbre 18 de la ligne d'entrée 12 est susceptible de se déplacer radialement (vis-à-vis de son axe longitudinal). Ceci est rendu possible par le fait qu'une de ses extrémités est montée rotulante (figure 5), par rapport par exemple à l'arbre de la turbine. L'extrémité de la l'arbre 18 comprend par exemple des cannelures 30 rotulantes engagées dans des cannelures complémentaires d'un manchon 32 de raccordement de la ligne d'entrée du réducteur à l'arbre de la turbine. On entend ici par déplacements radiaux, des pivotements de la ligne d'entrée 12 autour d'un point situé au niveau de son extrémité rotulante.

L'extrémité opposée de l'arbre 18 de la ligne d'entrée 12 peut ainsi se déplacer en direction radiale, ces déplacements étant amortis par un ressort 34.

Si une des lignes intermédiaires 16 est plus chargée (figure 3), cela veut dire que le couple transitant par cette ligne est plus important que sur l'autre ligne, donc l'effort f1 engendré par ce couple sur le pignon 20 de la ligne d'entrée est plus important d'un côté que de l'autre. Une force F sera donc appliquée sur le pignon 20 de la ligne d'entrée, ce qui provoquera le déplacement de la ligne d'entrée. Ce déplacement permet de rééquilibrer les jeux au niveau de la ligne d'entrée. A l'équilibre, les efforts f1, f2 sur le pignon 20 dus aux couples sur les lignes intermédiaires s'annulent, ce qui veut dire que les couples sur les lignes intermédiaires sont égaux.

Avantageusement, les moyens d'amortissement à ressort 34 sont associés à un palier à roulement 36 de guidage de l'arbre 18 de la ligne d'entrée 12.

Comme évoqué dans ce qui précède, un désalignement du pignon peut intervenir comme illustré par la figure 5. Ce fonctionnement désaligné oblige à appliquer une correction longitudinale de type « bombé » sur les dents du pignon. Cette correction induit une augmentation de la pression superficielle sur les dents. De plus, si le désalignement est important, il n'est pas forcément possible d'assurer un fonctionnement acceptable du réducteur, même avec application d'un bombé.

L'invention permet de remédier à ce problème grâce à l'amortissement de la ligne d'entrée dans son ensemble.

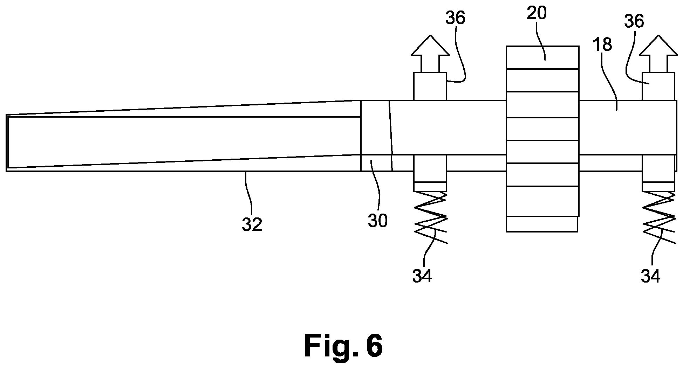

La figure 6 représente un exemple de réalisation de l'invention, dans lequel les éléments décrits dans ce qui précède sont désignés par les mêmes chiffres de référence.

Deux paliers à roulement 36, par exemple du type à billes, sont montés de part et d'autre du pignon 20, sur des extrémités de la ligne d'entrée 12.

De façon classique, chaque palier 36 peut comprendre deux bagues, respectivement interne et externe, entre lesquelles s'étend une rangée de billes qui peuvent être maintenues par une cage annulaire. La bague interne d'un premier palier 36 est montée fixement sur une extrémité de l'arbre 18 de la ligne d'entrée 12, opposée à son extrémité comportant les cannelures rotulantes 30. La bague interne du second palier 36 est montée fixement sur l'extrémité de l'arbre 18 comportant les cannelures rotulantes 30.

Des ressorts 34 d'amortissement supportent les paliers 36. Un premier ressort 34 supporte le premier palier 36, et un second ressort 34 supporte le second palier 36. Les ressorts 34 sont de préférence identiques. Il s'agit de préférence de ressorts de rappel. Ils sont avantageusement situés à équidistance du pignon 20.

L'extrémité de la l'arbre 18 qui comprend les cannelures 30 rotulantes est engagée dans des cannelures complémentaires d'un manchon 32 de raccordement de la ligne d'entrée du réducteur à l'arbre de la turbine.

L'invention fonctionne comme indiqué dans ce qui précède en relation avec les figures 3 et 4. Comme cela est visible en figure 6, si une des lignes intermédiaires 16 est plus chargée (figure 3), cela veut dire que le couple transitant par cette ligne est plus important que sur l'autre ligne, donc l'effort f1 engendré par ce couple sur le pignon 20 de la ligne d'entrée est plus important d'un côté que de l'autre. Une force F sera donc appliquée sur le pignon 20 de la ligne d'entrée, ce qui provoquera le déplacement de la ligne d'entrée, qui ne se désalignera pas pour autant grâce à l'invention.

## Revendications

1. Réducteur de vitesse (10) à deux lignes intermédiaires de transmission (16), en particulier pour une turbomachine, comprenant une ligne d'entrée (12) et une ligne de sortie (14) entraînée par la ligne d'entrée par l'intermédiaire desdites lignes intermédiaires (16), ces lignes intermédiaires (16) étant sensiblement parallèles, **caractérisé en ce qu'**il comprend des moyens de répartition de charges entre lesdites lignes intermédiaires, ces moyens de répartition de charges comportant des moyens rotulants (30) d'accouplement en rotation d'une première extrémité de la ligne d'entrée (12), des premiers moyens d'amortissement des déplacements radiaux de ladite première extrémité de la ligne d'entrée, et des seconds moyens d'amortissement des déplacements radiaux d'une seconde extrémité opposée de la ligne d'entrée (12).

2. Réducteur (10) selon la revendication 1, dans lequel lesdits premiers et seconds moyens d'amortissement sont configurés pour autoriser des déplacements de la ligne d'entrée (12) dans une direction sensiblement perpendiculaire à un plan passant sensiblement par des axes (C) des lignes intermédiaires (16).

3. Réducteur (10) selon la revendication 1 ou 2, dans lequel lesdits premiers et seconds moyens d'amortissement comprennent des ressorts (34), de préférence de rappel.

4. Réducteur (10) selon la revendication 3, dans lequel lesdits ressorts (34) sont identiques.

5. Réducteur (10) selon l'une des revendications précédentes, dans lequel lesdits premiers et seconds moyens d'amortissement comprennent des paliers à roulement.

6. Réducteur (10) selon la revendication 5, en dépendance de la revendication 4, dans lequel chacun desdits premiers et seconds moyens d'amortissement comprend un palier à roulement (36) qui est monté sur ladite première ou seconde extrémité de la ligne d'entrée (12), et qui est supporté par un ressort (34).

7. Réducteur (10) selon l'une des revendications précédentes, dans lequel lesdits premiers et seconds moyens d'amortissement sont identiques.

8. Réducteur (10) selon l'une des revendications précédentes, dans lequel lesdits premiers et seconds moyens d'amortissement sont montés de part et d'autre d'un pignon (20) de la ligne d'entrée (12).

9. Réducteur (10) selon la revendication précédente, dans lequel lesdits premiers et seconds moyens d'amortissement sont situés à équidistance dudit pignon (20).

10. Turbomachine, **caractérisée en ce qu'**elle comporte au moins un réducteur (10) selon l'une des revendications précédentes.

## Patentansprüche

1. Untersetzungsgetriebe (10) mit zwei Zwischenübertragungsleitungen (16), insbesondere für eine Turbomaschine, umfassend eine Eingangsleitung (12) und eine Ausgangsleitung (14), die mithilfe der Zwischenleitungen (16) von der Eingangsleitung angetrieben wird, wobei diese Zwischenleitungen (16) im Wesentlichen parallel sind, **dadurch gekennzeichnet, dass** es Mittel zur Lastverteilung zwischen den Zwischenleitungen umfasst, wobei diese Mittel zur Lastverteilung kugelgelenkartige Mittel (30) zum drehenden Kuppeln eines ersten Endes der Eingangsleitung (12), erste Mittel zur Dämpfung von radialen Bewegungen des ersten Endes der Eingangsleitung und zweite Mittel zur Dämpfung von radialen Bewegungen eines zweiten Endes gegenüber der Eingangsleitung (12) beinhalten.

2. Getriebe (10) nach Anspruch 1, wobei die ersten und zweiten Mittel zur Dämpfung konfiguriert sind, um Bewegungen der Eingangsleitung (12) in eine Richtung im Wesentlichen senkrecht zu einer Ebene, die im Wesentlichen die Achsen (C) der Zwischenleitungen (16) durchquert, zu erlauben.

3. Getriebe (10) nach Anspruch 1 oder 2, wobei die ersten und zweiten Mittel zur Dämpfung Federn (34), vorzugsweise Rückstellfedern, umfassen.

4. Getriebe (10) nach Anspruch 3, wobei die Federn (34) identisch sind.

5. Getriebe (10) nach einem der vorstehenden Ansprüche, wobei die ersten und zweiten Mittel zur Dämpfung Wälzlager umfassen.

6. Getriebe (10) nach Anspruch 5, abhängig von Anspruch 4, wobei jedes der ersten und zweiten Mittel zur Dämpfung ein Wälzlager (36) umfasst, das am ersten oder zweiten Ende der Eingangsleitung (12) montiert ist und das von einer Feder (34) gestützt wird.

7. Getriebe (10) nach einem der vorstehenden Ansprüche, wobei die ersten und zweiten Mittel zur Dämpfung identisch sind.

8. Getriebe (10) nach einem der vorstehenden Ansprüche, wobei die ersten und zweiten Mittel zur Dämpfung beiderseits eines Ritzels (20) der Eingangsleitung (12) montiert sind.

9. Getriebe (10) nach dem vorstehenden Anspruch, wobei die ersten und zweiten Mittel zur Dämpfung in gleichem Abstand zum Ritzel (20) gelegen sind.

10. Turbomaschine, **dadurch gekennzeichnet, dass** sie mindestens ein Getriebe (10) nach einem der vorstehenden Ansprüche beinhaltet.

## Claims

1. Speed reducer (10) with two intermediate transmission lines (16), in particular for a turbomachine, comprising an input line (12) and an output line (14) driven by the input line by means of said intermediate lines (16), these intermediate lines (16) being substantially parallel, **characterised in that** it comprises a means of distribution of load between said intermediate lines, this means of load distribution comprising ball-and-socket means (30) for swivel coupling a first end of the input line (12), first means for damping the radial movements of said first end of the input line, and secondary means for damping the radial movements of a second opposite end of the input line (12).

2. Reducer (10) according to claim 1, wherein said first and second damping means are configured to allow the input line (12) to move in a direction substantially perpendicular to a plane passing substantially through the axes (C) of the intermediate lines (16).

3. Reducer (10) according to claim 1 or 2, wherein said first and second damping means comprise springs (34), preferably return springs.

4. Reducer (10) according to claim 3, wherein said springs (34) are identical.

5. Reducer (10) according to one of the preceding claims, wherein said first and second damping means comprise roller bearings.

6. Reducer (10) according to claim 5, depending on claim 4, wherein each of said first and second damping means comprises a roller bearing (36) which is mounted on said first or second end of the input line (12), and which is supported by a spring (34).

7. Reducer (10) according to one of the preceding claims, wherein said first and second damping means are identical.

8. Reducer (10) according to one of the preceding claims, wherein said first and second damping means mounted on both sides of a gear (20) of the input line (12).

9. Reducer (10) according to the preceding claim, wherein said first and second damping means are situated equidistantly from said gear (20).

10. Turbomachine, **characterised in that** it comprises at least one reducer (10) in accordance with one of the preceding claims.
